# EUROPEAN PATENT SPECIFICATION

(11) **EP 3 540 696 B1**
(45) Date of publication and mention of the grant of the patent: **20.11.2024**
(21) Application number: 19161841.2
(22) Date of filing: 11.03.2019
(51) Int. Cl.: G06T 15/00, G06T 1/60, G06T 11/40

(54) **A METHOD AND AN APPARATUS FOR VOLUMETRIC VIDEO RENDERING**
VERFAHREN UND VORRICHTUNG ZUM VOLUMETRISCHEN VIDEO-RENDERING
PROCÉDÉ ET APPAREIL DE RENDUE DE VIDEO VOLUMETRIQUE

(30) Priority: 16.03.2018 FI 20185250
(43) Date of publication of application: 18.09.2019
(73) Proprietor: Nokia Technologies Oy, 02610 Espoo (FI)
(72) Inventor: PYSTYNEN, Johannes, 33870 Tampere (FI); ROIMELA, Kimmo, 33710 Tampere (FI); PESONEN, Mika, 33800 Tampere (FI)
(74) Representative: Berggren Oy

(56) References cited:
- GB-A- 2 537 660
- RUFAEL MEKURIA ET AL: "Design, Implementation, and Evaluation of a Point Cloud Codec for Tele-Immersive Video", IEEE TRANSACTIONS ON CIRCUITS AND SYSTEMS FOR VIDEO TECHNOLOGY, vol. 27, no. 4, 1 April 2017 (2017-04-01), US, pages 828 - 842, XP055548820, ISSN: 1051-8215, DOI: 10.1109/TCSVT.2016.2543039
- MICHAEL WIMMER AND CLAUS SCHEIBLAUER: "Instant Points: Fast Rendering of Unprocessed Point Clouds", EUROGRAPHICS SYMPOSIUM ON POINT-BASED GRAPHICS, 2006, Vienna University of Technology, Austria, pages 1 - 9, XP002790406, Retrieved from the Internet <URL:https://www.cg.tuwien.ac.at/research/publications/2006/WIMMER-2006-IP/WIMMER-2006-IP-Paper.pdf> [retrieved on 20190408]

## Description

### Technical Field

The present solution generally relates to volumetric video rendering. In particular, the solution relates to reconstruction of point cloud tiled screen space surface.

### Background

Since the beginning of photography and cinematography, the most common type of image and video content has been captured by cameras with relatively narrow field of view, and displayed as a rectangular scene on flat displays. The cameras are mainly directional, whereby they capture only a limited angular field of view (the field of view towards which they are directed).

More recently, new image and video capture devices are available. These devices are able to capture visual and audio content all around them, i.e. they can capture the whole angular field of view, sometimes referred to as 360 degrees field of view. More precisely, they can capture a spherical field of view (i.e., 360 degrees in all spatial directions). Furthermore, new types of output technologies have been invented and produced, such as head-mounted displays. These devices allow a person to see visual content all around him/her, giving a feeling of being "immersed" into the scene captured by the 360 degrees camera. The new capture and display paradigm, where the field of view is spherical, is commonly referred to as virtual reality (VR) and is believed to be the common way people will experience media content in the future.

For volumetric video, a scene may be captured using one or more 3D (three-dimensional) cameras. The cameras are in different positions and orientations within a scene. One issue to consider is that compared to 2D (two-dimensional) video content, volumetric 3D video content has much more data, so viewing it requires lots of bandwidth (with or without transferring it from a storage location to a viewing device): disk I/O, network traffic, memory bandwidth, GPU (Graphics Processing Unit) upload. Capturing volumetric content also produces a lot of data, particularly when there are multiple capture devices used in parallel. Document "Design, Implementation, and Evaluation of a Point Cloud Codec for Tele-Immersive Video" by Rufael Mekuria and Pablo Cesar, IEEE Transactions on Circuits and Systems for Video Technology, Vol. 27, No. 4, April 2017, discloses a real-time codec for 3D point clouds. Coding is done by space partitioning using an octree and a bounding box is used to align frames.

### Summary

Now there has been invented a method and technical equipment implementing the method, for providing an improvement for volumetric video rendering. Various aspects of the invention include a method, an apparatus, and a computer readable medium comprising a computer program stored therein, which are characterized by what is stated in the independent claims. Various embodiments of the invention are disclosed in the dependent claims.

According to a first aspect, there is provided a method according to claim 1.

According to a second aspect, there is provided an apparatus according to claim 7.

According to a third non-claimed aspect, there is provided an apparatus comprising at least one processor, memory including computer program code, the memory and the computer program code configured to, with the at least one processor, cause the apparatus to perform at least the following: processing a data stream, comprising input point cloud tile data arranged into bounding boxes (BBs); sorting BBs according to a viewing location; dividing a rendering framebuffer into rendering tiles; associating BBs with the rendering tiles; storing indices of BBs that are overlapping in overlapped rendering tiles; reconstructing a screen space surface by rendering the points of the BBs to rendering tile points, by utilizing the stored indices for the overlapped rendering tiles; and rendering the reconstructed screen space.

According to a fourth aspect, there is provided a computer program product embodied on a non-transitory computer readable medium, according to claim 15.

According to an embodiment, the data stream is received.

According to an embodiment, a point cloud is split into tiles and their respective BBs.

According to an embodiment, the sorted BBs and their rendering metadata are stored.

According to an embodiment, the rendering metadata for each bounding box comprises one or more of the following: minimum depth in the screen space, maximum depth in the screen space.

According to an embodiment, the bounding boxes comprise axis-aligned bounding boxes (AABB).

According to an embodiment, the rendering is terminated after all rendering screen space tile points have been covered.

### Description of the Drawings

In the following, various embodiments of the invention will be described in more detail with reference to the appended drawings, in which
- Fig. 1: shows a system according to an embodiment for generating and viewing volumetric video;
- Fig. 2a: shows a camera device according to an embodiment comprising two cameras;
- Fig. 2b: shows a viewing device according to an embodiment;
- Fig. 2c: shows a camera according to an embodiment;
- Fig. 3: shows an encoding process according to an embodiment;
- Fig. 4: shows a decoding process according to an embodiment;
- Figs. 5a to 5d: shows an overview of a pipeline patch data from a character model to screen pixels;
- Fig. 6 and 7: show examples for arranging point cloud into bounding boxes;
- Fig. 8: shows an example of a method according to an embodiment;
- Fig. 9: shows an example of rendering a screen space tile from its associated BB list;
- Fig. 10: shows an example of BBs overlapping in depth;
- Fig. 11: shows an example of two BBs colliding with screen space tiles; and
- Fig. 12: is a flowchart illustrating a method according to an embodiment.

### Description of Example Embodiments

The present embodiments relate to coding and transport of point cloud data and optimal surface reconstruction/rendering of the content in screen space, e.g. in the current MPEG-I Point Cloud Compression work.

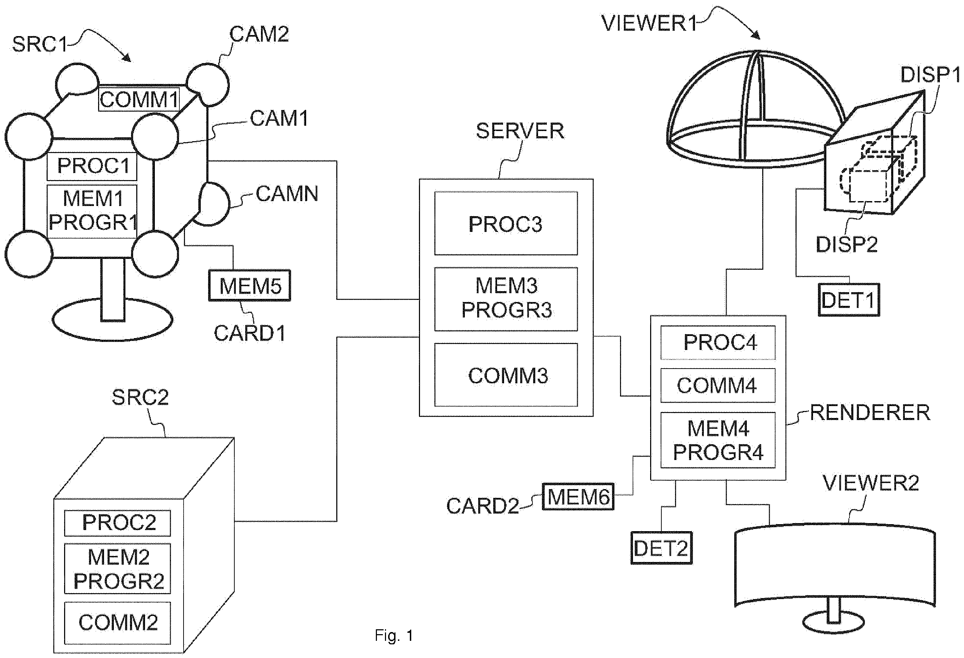

Fig. 1 shows a system and apparatuses for stereo viewing, that is, for 3D video and 3D audio digital capture and playback. The task of the system is that of capturing sufficient visual and auditory information from a specific location such that a convincing reproduction of the experience, or presence, of being in that location can be achieved by one or more viewers physically located in different locations and optionally at a time later in the future. Such reproduction requires more information that can be captured by a single camera or microphone, in order that a viewer can determine the distance and location of objects within the scene using their eyes and their ears. To create a pair of images with disparity, two camera sources are used. In a similar manner, for the human auditory system to be able to sense the direction of sound, at least two microphones are used (the commonly known stereo sound is created by recording two audio channels). The human auditory system can detect the cues, e.g. in timing difference of the audio signals to detect the direction of sound.

The system of Fig. 1 may comprise three main parts: image sources, a server and a rendering device. A video capture device SRC1 comprises one or more cameras CAM1, CAM2, ..., CAMN with overlapping field of view so that regions of the view around the video capture device is captured from at least two cameras. The device SRC1 may comprise multiple microphones (not shown in Figure 1) to capture the timing and phase differences of audio originating from different directions. The device SRC1 may comprise a high-resolution orientation sensor so that the orientation (direction of view) of the plurality of cameras can be detected and recorded. The device SRC1 comprises or is functionally connected to a computer processor and memory, the memory comprising computer program code for controlling the video capture device. The image stream captured by the video capture device may be stored on a memory device for use in another device, e.g. a viewer, and/or transmitted to a server using a communication interface. It needs to be understood that although a camera setup of three cameras is described here as part of the system, another type of setup may be used instead as part of the system.

Alternatively, or in addition to the video capture device SRC1 creating an image stream, or a plurality of such, one or more sources SRC2 of synthetic images may be present in the system. Such sources of synthetic images may use a computer model of a virtual world to compute the various image streams it transmits. For example, the source SRC2 may compute N video streams corresponding to N virtual cameras located at a virtual viewing position. When such a synthetic set of video streams is used for viewing, the viewer may see a three-dimensional virtual world. The device SRC2 comprises or is functionally connected to a computer processor PROC2 and memory MEM2, the memory comprising computer program PROGR2 code for controlling the synthetic sources device SRC2. There may be a storage, processing and data stream serving network in addition to the capture device SRC1. For example, there may be a server SERVER or a plurality of servers storing the output from the capture device SRC1 or computation device SRC2. The device SERVER comprises or is functionally connected to a computer processor PROC3 and memory MEM3, the memory comprising computer program PROGR3 code for controlling the server. The device SERVER may be connected by a wired or wireless network connection, or both, to sources SRC1 and/or SRC2, as well as the viewer devices VIEWER1 and VIEWER2 over the communication interface COMM3.

For viewing the captured or created video content, there may be one or more viewer devices VIEWER1 and VIEWER2. These devices may have a rendering module and a display module, or these functionalities may be combined in a single device. The devices may comprise or be functionally connected to a computer processor PROC4 and memory MEM4, the memory comprising computer program PROG4 code for controlling the viewing devices. The viewer (playback) devices may comprise a data stream receiver for receiving a video data stream from a server and for decoding the video data stream. The data stream may be received over a network connection through communications interface COMM4, or from a memory device MEM6 like a memory card CARD2. The viewer devices may have a graphics processing unit for processing of the data to a suitable format for viewing. The viewer VIEWER1 comprises a high-resolution stereo-image head-mounted display for viewing the rendered stereo video sequence. The head-mounted display may have an orientation sensor DET1 and stereo audio headphones. According to an embodiment, the viewer VIEWER2 comprises a display enabled with 3D technology (for displaying stereo video), and the rendering device may have a head-orientation detector DET2 connected to it. Alternatively, the viewer VIEWER2 may comprise a 2D display, since the volumetric video rendering can be done in 2D by rendering the viewpoint from a single eye instead of a stereo eye pair. Any of the devices (SRC1, SRC2, SERVER, RENDERER, VIEWER1, VIEWER2) may be a computer or a portable computing device, or be connected to such. Such rendering devices may have computer program code for carrying out methods according to various examples described in this text.

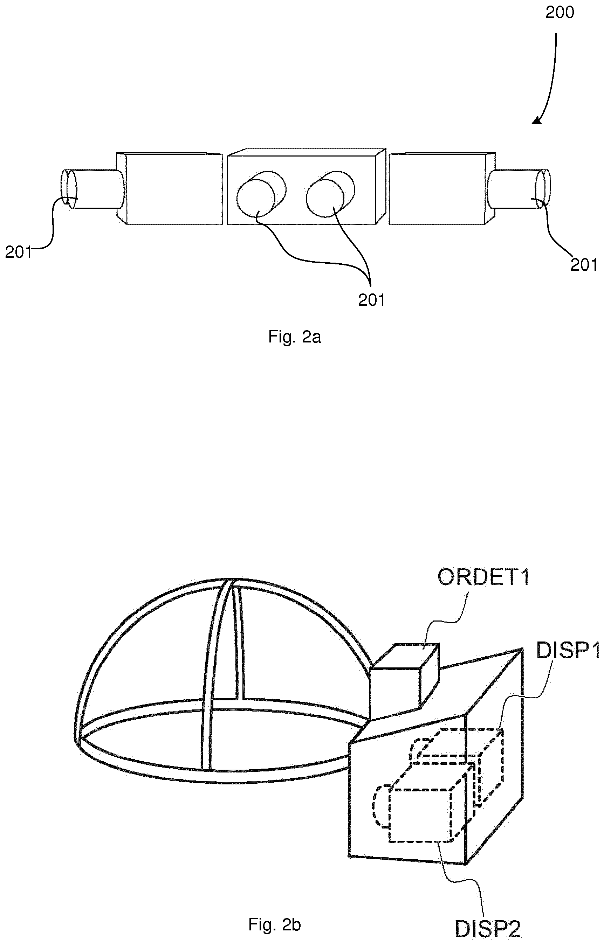

Fig. 2a shows a camera device 200 for stereo viewing. The camera comprises two or more cameras that are configured into camera pairs 201 for creating the left and right eye images, or that can be arranged to such pairs. The distances between cameras may correspond to the usual (or average) distance between the human eyes. The cameras may be arranged so that they have significant overlap in their field-of-view. For example, wide-angel lenses of 180-degrees or more may be used, and there may be 2, 3, 4, 5, 6, 7, 8, 9, 10, 12, 16, or 20 cameras. The cameras may be regularly or irregularly spaced to access the whole sphere of view, or they may cover only part of the whole sphere. For example, there may be three cameras arranged in a triangle and having different directions of view towards one side of the triangle such that all three cameras cover an overlap area in the middle of the directions of view. As another example, 8 cameras having wide-angle lenses and arranged regularly at the corners of a virtual cube and covering the whole sphere such that the whole or essentially whole sphere is covered at all directions by at least 3 or 4 cameras. In Fig. 2a three stereo camera pairs 201 are shown.

Fig. 2b shows a head-mounted display (HMD) for stereo viewing. The head-mounted display comprises two screen sections or two screens DISP1 and DISP2 for displaying the left and right eye images. The displays are close to the eyes, and therefore lenses are used to make the images easily viewable and for spreading the images to cover as much as possible of the eyes' field of view. The device is attached to the head of the user so that it stays in place even when the user turns his head. The device may have an orientation detecting module ORDET1 for determining the head movements and direction of the head. The head-mounted display gives a three-dimensional (3D) perception of the recorded/streamed content to a user.

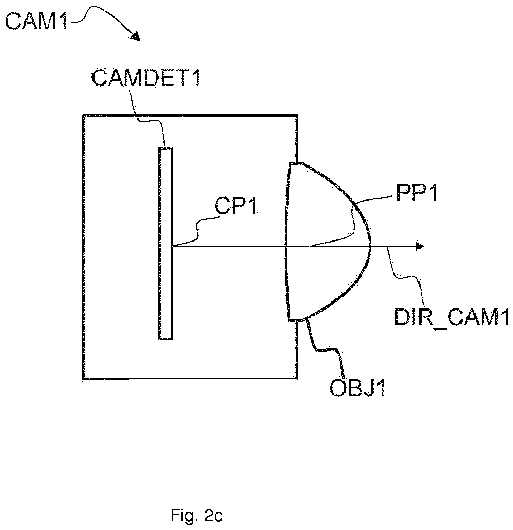

Fig. 2c illustrates a camera CAM1. The camera has a camera detector CAMDET1, comprising a plurality of sensor elements for sensing intensity of the light hitting the sensor element. The camera has a lens OBJ1 (or a lens arrangement of a plurality of lenses), the lens being positioned so that the light hitting the sensor elements travels through the lens to the sensor elements. The camera detector CAMDET1 has a nominal center point CP1 that is a middle point of the plurality of sensor elements, for example for a rectangular sensor the crossing point of the diagonals. The lens has a nominal center point PP1, as well, lying for example on the axis of symmetry of the lens. The direction of orientation of the camera is defined by the line passing through the center point CP1 of the camera sensor and the center point PP1 of the lens. The direction of the camera is a vector along this line pointing in the direction from the camera sensor to the lens. The optical axis of the camera is understood to be this line CP1-PP1.

The system described above may function as follows. Time-synchronized video, audio and orientation data is first recorded with the capture device. This may comprise multiple concurrent video and audio streams as described above. These are then transmitted immediately or later to the storage and processing network for processing and conversion into a format suitable for subsequent delivery to playback devices. The conversion can involve post-processing steps to the audio and video data in order to improve the quality and/or reduce the quantity of the data while preserving the quality at a desired level. Finally, each playback device receives a stream of the data from the network and renders it into a stereo viewing reproduction of the original location which can be experienced by a user with the head-mounted display and headphones.

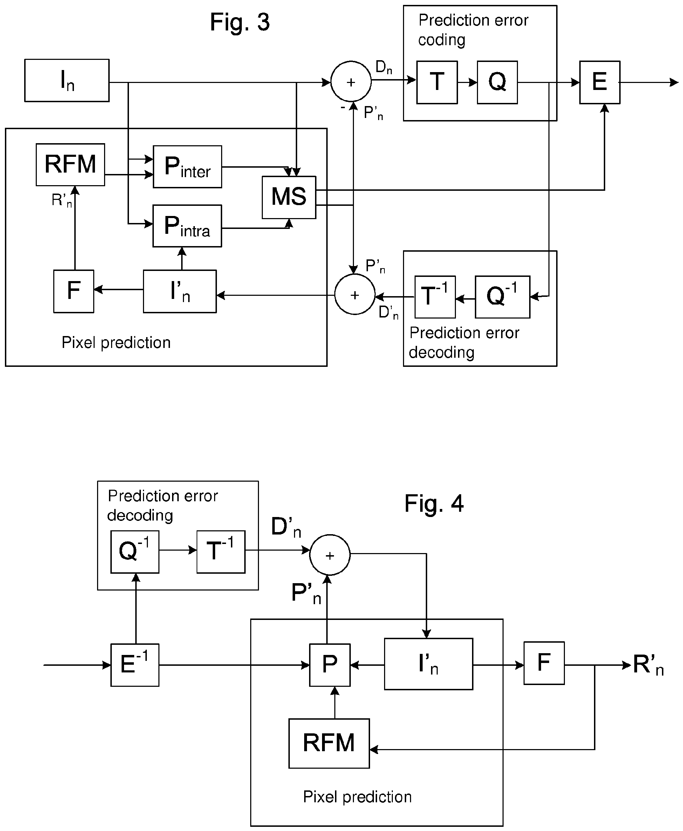

A video codec may comprise an encoder that transforms an input video into a compressed representation suited for storage/transmission and/or a decoder that can uncompress the compressed video representation back into a viewable form. The encoder may discard some information in the original video sequence in order to represent the video in a more compact form (that is, at lower bitrate). An example of an encoding process is illustrated in Figure 3. Figure 3 illustrates an image to be encoded (Iⁿ); a predicted representation of an image block (P'"); a prediction error signal (Dⁿ ); a reconstructed prediction error signal (D'"); a preliminary reconstructed image (I'ⁿ); a final reconstructed image (R'ⁿ); a transform (T) and inverse transform (T⁻¹); a quantization (Q) and inverse quantization (Q⁻¹ ); entropy encoding (E); a reference frame memory (RFM); inter prediction (P^{inter}); intra prediction (P^{intra}); mode selection (MS) and filtering (F). An example of a decoding process is illustrated in Figure 4. Figure 4 illustrates a predicted representation of an image block (P'"); a reconstructed prediction error signal (D'"); a preliminary reconstructed image (I'ⁿ); a final reconstructed image (R'ⁿ); an inverse transform (T⁻¹); an inverse quantization (Q⁻¹); an entropy decoding (E⁻¹); a reference frame memory (RFM); a prediction (either inter or intra) (P); and filtering (F).

Volumetric video may be captured using one or more 3D cameras, as shown in Figure 1. When multiple cameras are in use, the captured footage is synchronized so that the cameras provide different viewpoints to the same world. In contrast to traditional 2D/3D video, volumetric video describes a 3D model of the world where the viewer is free to move and observer different parts of the world.

Volumetric video refers to video that enables the viewer to move in six degrees of freedom: in contrast to common 360° video, where the user has from 2 to 3 degrees of freedom (yaw, pitch, and possibly roll), a volumetric video represents a 3D volume of space rather than a flat image plane. Volumetric video frames contain a large amount of data because they model the contents of a 3D volume instead of just a 2D plane. However, only a relatively small part of the volume changes over time. Therefore, it may be possible to reduce the total amount of data by only coding information about an initial state and changes which may occur between frames. Volumetric video can be rendered from synthetic 3D animations, reconstructed from multi-view video using 3D reconstruction techniques such as structure from motion, or captured with a combination of cameras and depth sensors such as LiDAR, for example.

One common representation of volumetric video is 3D point clouds, where each point of each 3D surface is described as a 3D point with colour and/or other attribute information such as surface normal or material reflectance.

Point cloud is a set of data points in a coordinate system, for example in a three-dimensional coordinate system being defined by X, Y, and Z coordinates. The points may represent an external surface of an object in the screen space, e.g. in a three-dimensional space.

Point cloud data can include millions of points. For many applications, the ideal point size may be the size of a screen pixel or smaller. However, this often is not the case because point cloud data may be created with a specific sampling rate of the geometric surface and it does not take into account the actual viewing distance and the screen resolution of the client renderer. In addition, often the point cloud data is not an exact surface representation and therefore has holes in it.

In addition, LOD (Level of Detail) processing of point clouds cannot be easily done in real-time due to non-connectivity of the points. Due to varying content and the amount of points, it is common that a point cloud data has holes when it is presented.

Simple way to reduce holes when presenting the point cloud data is to increase the size of the points. However, this introduces stair stepping surfaces and blocky looking content, and surface colours are not properly interpolated. In addition, nearby points can overlap background points and therefore introduce an unrealistic re-presentation of the original content.

Furthermore, point cloud rendering does not scale well for different client resolutions and client performances. There may be millions of points in a point cloud, and all points need to be processed and rendered, this may affect the performance of the client in unwanted manner. In addition, viewing the point cloud data further away, millions of points can map to only few pixels in screen space.

In computer graphics several screen space surface reconstruction methods may be applied. In one of the processes, quads are rendered to the screen with depth information at first, after which the depth map is blurred, and a smoothed surface is created.

In addition, screen space techniques, such as pixel linked lists or surface construction techniques may be used. The present embodiments are targeted to screen space surface reconstruction, where the surface is created in a different way compared to the known methods. The present embodiments create the surfaces from encoded texture tiles of geometry and colour information.

In computer graphics a bounding volume is a closed volume that completely contains a set of objects. The bounding volume is a three-dimensional or two-dimensional shape (e.g. a cuboid, a sphere, a rectangle, a cylinder) containing an object. A bounding box may be aligned with the axes of the coordinate system, wherein the bounding box is referred to as an axis-aligned bounding box (AABB). Furthermore, a bounding box can be arbitrary oriented minimum bounding box, or object oriented minimum bounding box. The present solution is utilizing input point cloud tile BBs for creating a screen space tile list. The type of the bounding box (BB) can be of any type. The input point cloud tile data and their respective BBs may also be at least partially overlapping.

According to the present embodiments, the input point cloud tiles may be sorted prior to screen space tile mapping and they may be processed from front-to-back order in the screen space. This enables an early-out in screen space surface reconstruction. Screen space pixels are generated based on geometry (e.g. point) size in the screen space for robust surface re-creation. When discussing on the present embodiments the following terms are used. "Screen space" refers to "rendering space", whereby "screen space tiles" refers to "rendering tiles". "An input tile" refers to a tile of data in input texture. "A patch" refers to continuous tiles in input texture. "Input tile BB" refers to a bounding box for the geometry of that tile.

According to present embodiments, the BBs are used for detecting which tiles need to be processed in one screen space tile and which can be processed separately. The input tile BBs are projected to the screen space, and the indices of all overlapping input tile BBs are stored to every screen space tile that they overlap. Overlapping screen space tiles are processed separately, but they fetch the same input tile data to which the stored indices refer to. Each screen space tile reconstructs the surface separately from neighboring screen space tiles. In addition, the present embodiments refer to optimal surface reconstruction in the screen space, which tackles various difficulties with representing surfaces with point cloud data.

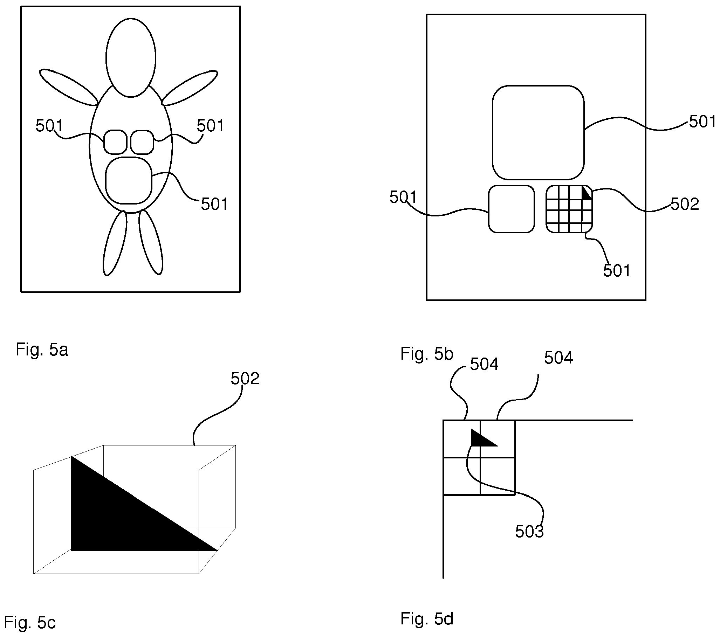

Figures 5a-d illustrate an overview of the pipeline patch data from a character model (Fig. 5a) to screen pixels (Fig. 5d). Figure 5a represents a character model with three patches 501. Figure 5b represents texture with patches 501 and one patch with tiles 502 shown inside the patch 501 (patches are re-ordered to a texture). Figure 5c represents tile 502 with expanded BB. Figure 5d illustrates rendered surface 503 overlapping two screen space tiles 504.

The present solution is discussed next by means of the following examples, where any two or more of them can be combined. In the examples
- the first example relates to arranging the input point cloud tile data into bounding boxes (BBs) which can be projected to screen-space tiles for rendering;
- the second example relates to associating BBs with rendering tiles;
- the third example relates to screen-space surface reconstruction; and
- the fourth part relates to dynamic rendering algorithm selection.

### Splitting point clouds into BBs

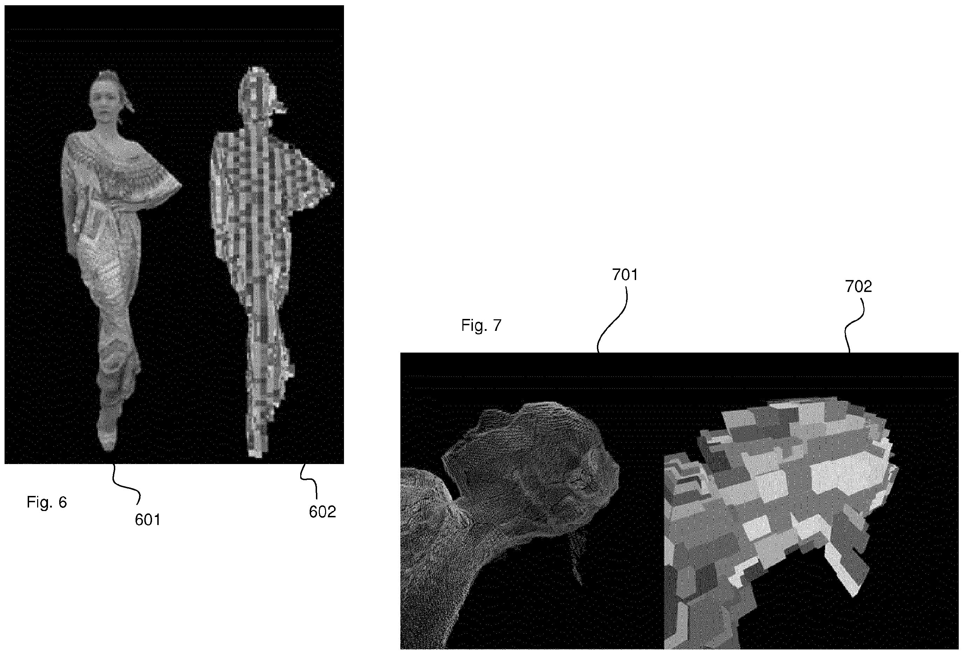

The first example is illustrated in Figures 6 and 7. Both figures show two images (601, 602; 701, 702) showing rendered point cloud data (601; 701) and generated tile BB per input tiles (602; 702). It is noticed from the figures that the size of the BBs vary per input tile in 3D space.

In the current MPEG-I PCC, point clouds are grouped into patches (see for example Figure 5a). Each patch has fixed size tiles (e.g. 16 x 16) inside (see for example Figure 5b). The tiles can be expanded into the third dimension by calculating the minimum and maximum depth values inside each tile (Figure 5c). The calculated data (i.e. minimum and maximum depth values) can be either stored as per-tile metadata in the bitstream or generated during decoding. Depending on the platform, it may be beneficial to generate the BB data at encoding stage. This may speed up the decoding process and give more hardware resources to other tasks. With smaller patch and tile counts, and with desktop, the actual input tile BB generation can be done real-time in the decoding phase without noticeable performance loss.

The tile boundaries and the minimum and maximum depth values define the minimum BB of the tile locally, which can be transformed to object space and then world space based on the patch offsets and tile coordinates. An object space is coordinate system unique for a single object. The BB per tile is the minimum bounding box fitted for the data inside of one tile (i.e. minimum and maximum of x values, minimum and maximum of y values, minimum and maximum of depth values).

At this stage, tile data can be (optionally) encoded into the bitstream. The present embodiments do not have to take into account how the actual point cloud tile data is encoded and/or decoded. The present embodiments may include some metadata per tile (e.g. minimum and maximum x values, minimum and maximum y values, and/or minimum and maximum depth values per tile). This data can be calculated real-time but often it is better to be calculated offline and attach to tile or patch metadata.

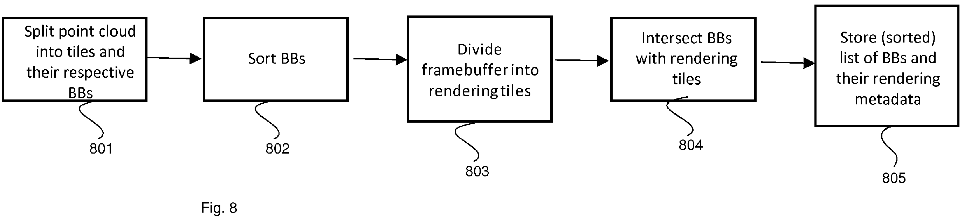

Figure 8 illustrates a process, according to an embodiment, for splitting a model into tiles and their bounding boxes and associating those with screen-space rendering tiles (see the next example below). The process may comprise:
- splitting point cloud into tiles and their BBs 801;
- sorting BBs 802;
- dividing framebuffer into rendering tiles 803;
- intersecting BBs with rendering tiles 804; and
- storing (sorted) list of BBs and their rendering metadata 805.

It is to be noticed that the rendering metadata in the last box 805 may comprise minimum and maximum depths in the view space, which is different from the minimum and maximum values generated for the BBs initially. The rendering metadata might include these depth values and/or any other additional rendering related metadata that helps the screen space surface reconstruction. Input tile and BB creation 801 can happen during encoding or real-time at the decoding phase.

### Associating Input BBs with rendering tiles

On the client side, the input tiles are processed as follows: If the tiles have not been arranged into BBs, then on the client side, one BB is generated per one input tile data. The BBs for input tiles may have shapes of a cuboid and may be projected to the screen space with view and projection parameters. In addition, the processing order may be based on the distance to the viewing location. Sorting the BBs can for example be done based on the tile center point distance to the viewing location. This final sorting may be done in real-time on the CPU (Central Processing Unit) or on the GPU (Graphics Processing Unit) based on the tile and patch metadata. The bounding boxes of input tile data may overlap.

Optionally, the sorting can be done in the screen space tiles with e.g. a technique called per pixel linked list (later referred to as "linked list"). In per pixel or tile linked lists, all the colliding indices per tile are stored to tile index list. In the rendering phase, all the indices are fetched, sorted, and then processed.

The rendering framebuffer is logically divided into a grid of rendering tiles (screen space tiles). Based on the rendering view parameters, each rendering tile defines its own 3D frustum.

Input tile BBs are projected from object space (Figure 5c) to screen space (Figure 5d), where they can be intersected against the tile frusta to see which screen space tiles are intersected by which input BB. This can be done by explicitly culling the BBs against the frusta, or implicitly through rasterization. The rasterization needs to be conservative and should be done with pixel size of screen space tile size, in which case the projection to screen space tiles automatically view frustum culls the input data.

Screen space tiles store a list of BBs, and possibly some metadata for faster surface reconstruction e.g. their minimum and maximum (view space) depth values (Fig. 8; 805) in the correct front-to-back order. This screen space tile data is stored to GPU resources, GPU buffers or GPU images. A list of all the overlapping input BBs that cover the screen space tile is stored per screen space tile. In addition, some additional metadata per input tile can be stored to speed up the actual screen space surface reconstruction.

### Screen-space surface reconstruction

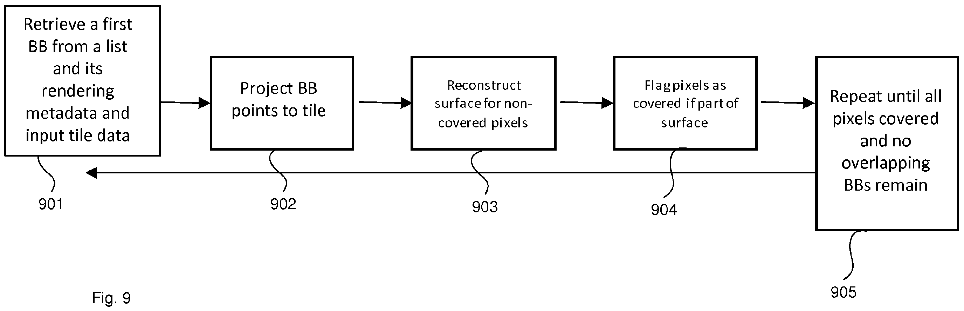

Once input tile BBs have been associated with screen-space tiles, rendering of each screen-space tile can proceed as shown in Figure 9. The process of the example of Figure 9 comprises
- retrieving a first BB from a list 901;
- projecting BB points to tile 902;
- reconstructing surface for non-covered pixels 903;
- flagging pixels as covered if part of the surface 904;
- repeating until all pixels covered and no overlapping BBs remain 905; and
- continuing the process until all pixels are covered.

Now that all the possible visible BBs are in their respective screen space tiles, they can be started to be processed front-to-back in every tile.

Screen space pixels are reconstructed based on the input tile point sizes in the screen space. Input tile data can be sampled based on the view space ray going through the input tile BB. Therefore, the actual input surface can be constructed, and the texture be sampled based on the desired sampling density. To make this process more flexible and precise on surfaces, one can add additional surface occupancy values to the input tile data if there can be multiple surfaces inside a single tile and/or inside a single patch.

When the input tile data is processed in the screen space front-to-back order, the data can be processed per pixel or just by scattering the points into the screen space tile pixels. With per pixel processing an early-out mechanism can be fully utilized: by keeping track of already covered pixels within the tile, the tile rendering can terminate early once all pixels are covered.

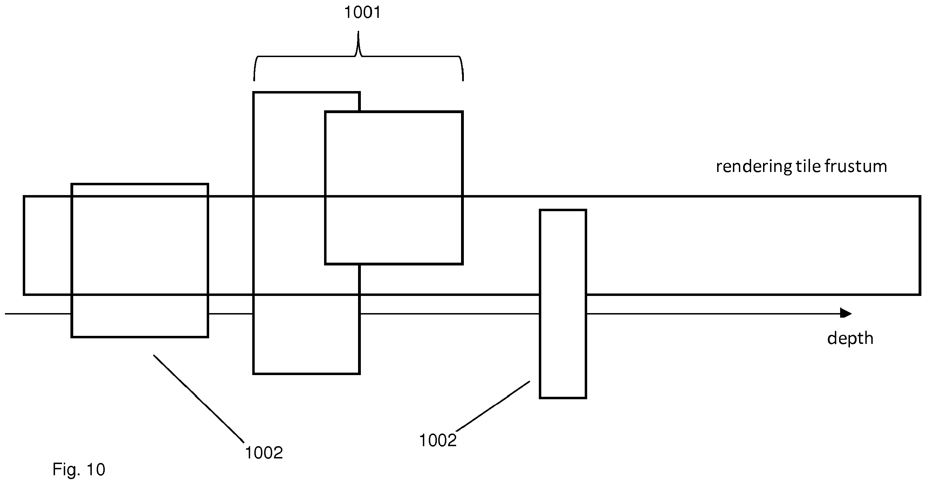

Figure 10 illustrates BBs 1001 overlapping in depth. The overlapping BBs 1001 may be processed as a unit, since the points inside them may overlap. The non-overlapping BBs 1002 guarantee the ordering of points inside them, so once a pixel is generated from a non-overlapping BB 602, no points from BBs behind it can affect those pixels any more.

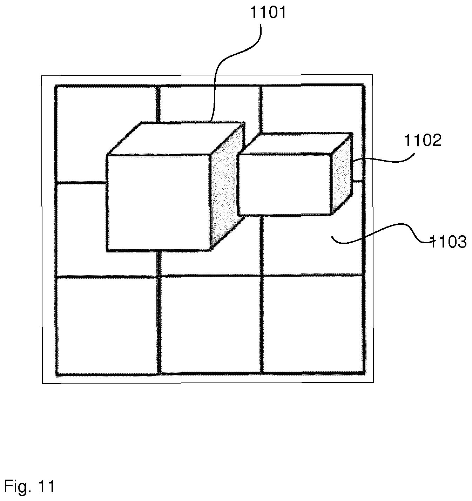

Screen space tiles can be associated with additional rendering metadata information for example a view space depth minimum and maximum values per input tile. BBs of some tiles may overlap in the screen space as shown in Figure 11, where two BBs 1101, 1102 collide with same screen space tiles 1103. The first BB 1101 is created from a single input tile when taking into consideration the x, y, and depth values of the tile. The second BB 1102 is created similarly. It is to be noticed that the BBs can be of different size and overlap different amount of screen space tiles. A screen space tile where at least two bounding boxes are overlapping may be referred to as an overlapped tile, an overlapped screen space tile, or an overlapped rendering tile.

Because the BBs may overlap in the screen space and with their depth data, it is beneficial to add some metadata like view space minimum and maximum depth values per tile and speed up the surface reconstruction. With this additional data, we can stop processing the following BBs that cannot have smaller depth values than our currently sampled surface depth. If there are multiple BBs overlapping in the depth dimension, the other overlapping BBs are similarly processed, and the nearest surface sample generated for each pixel is kept.

There are number of benefits when processing the input tile data in the screen space. For example, fast local memory can be used inside the tile groups and overdraw can be minimized. Another benefit is that since all points originate from the same part of the model (as a result of the patch assignment and small BB splitting), the points are part of the same surface and any gaps between points can be filled with interpolated data, simplifying the rendering algorithm.

### Dynamic rendering algorithm selection

Since the BB dimensions and scaling factor are known during the early BB projection stage, the rendering algorithm can be selected within each tile based on the properties of the BBs being rendered. For example, a BB that is enlarged enough to make the points very sparse may benefit from using a different algorithm for interpolating the surface between the original data points, whereas a small BB which tightly packed points may opt for a super sampling-based algorithm to avoid aliasing.

There are many possible rendering algorithms that can be used with presented screen space tile approach. In the following, a few of them are mentioned: Algorithm 1, where based on the view distance and known size of input tiles, it is possible to sample the input tiles with the screen space pixel density to reduce holes and oversampling of data; Algorithm 2, where a ray is started from the view space tile minimum depth value and the input tiles are sample on its way until a satisfying depth hit is got; Algorithm 3, in which an initial sample is the tile minimum view space depth. Then we work with quad tree -style towards per pixel samples.

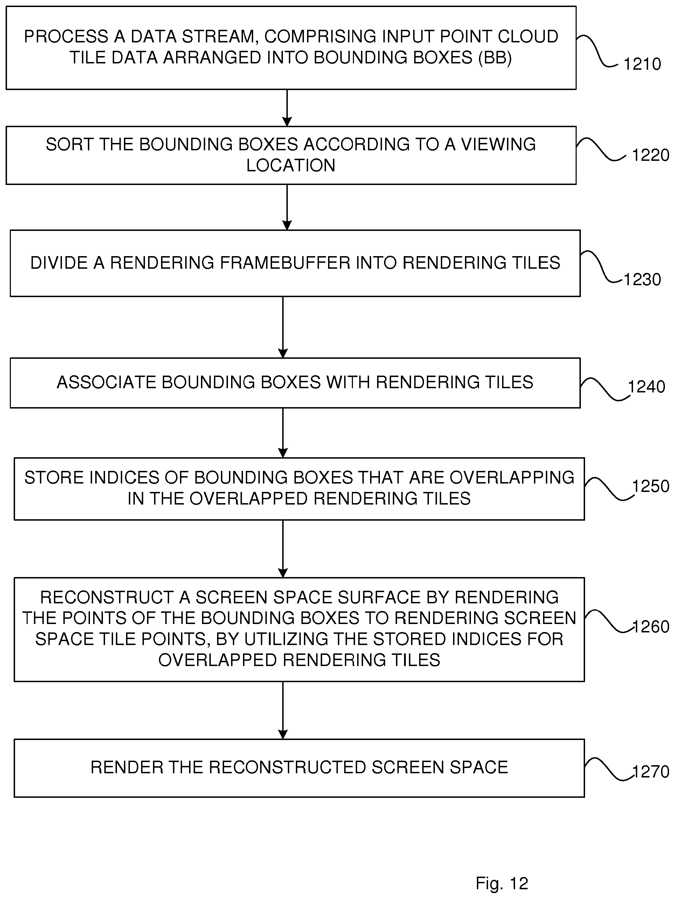

Figure 12 is a flowchart illustrating a method according to an embodiment. A method comprises
- processing a data stream, comprising input point cloud tile data arranged into bounding boxes (BBs) 1210;
- sorting the BBs according to a viewing location 1220;
- dividing a rendering framebuffer into rendering tiles 1230;
- associating BBs with rendering tiles 1240;
- storing indices of BBs that are overlapping in the overlapped rendering tiles 1250;
- reconstructing a screen space surface by rendering the points of the BBs to rendering screen space tile points , by utilizing the stored indices for overlapped rendering tiles 1260; and
- rendering the reconstructed screen space 1270.

An apparatus according to an embodiment comprises means for processing a data stream, comprising input point cloud tile data arranged into bounding boxes (BBs); means for sorting BBs according to a viewing location; means for dividing a rendering framebuffer into rendering tiles; means for associating BBs with rendering tiles; means for storing indices of BBs that are overlapping in the overlapped rendering tiles; means for reconstructing a screen space surface by rendering the points of the BBs to rendering screen space tile points and terminating the rendering after all rendering tile points are covered; and means for rendering the reconstructed screen space. The means comprises a processor, a memory, and a computer program code residing in the memory, wherein the processor may further comprise processor circuitry.

The various embodiments may provide advantages. For example, the embodiments optimize the client rendering phase of PCC (Point Cloud Compression) or similar point cloud data. With only minor addition to current MPEG-I PCC, overdraw as well as the memory and processing bandwidth of said data can be reduced. The present embodiments scale well with different requirements in presentation screen resolution, available bandwidth and processing power.

The various embodiments of the invention can be implemented with the help of computer program code that resides in a memory and causes the relevant apparatuses to carry out the invention. For example, a device may comprise circuitry and electronics for handling, receiving and transmitting data, computer program code in a memory, and a processor that, when running the computer program code, causes the device to carry out the features of an embodiment. Yet further, a network device like a server may comprise circuitry and electronics for handling, receiving and transmitting data, computer program code in a memory, and a processor that, when running the computer program code, causes the network device to carry out the features of an embodiment.

If desired, the different functions discussed herein may be performed in a different order and/or concurrently with other. Furthermore, if desired, one or more of the above-described functions and embodiments may be optional or may be combined.

Although various aspects of the embodiments are set out in the independent claims, other aspects comprise other combinations of features from the described embodiments and/or the dependent claims with the features of the independent claims, and not solely the combinations explicitly set out in the claims.

It is also noted herein that while the above describes example embodiments, these descriptions should not be viewed in a limiting sense. Rather, there are several variations and modifications, which may be made without departing from the scope of the appended claims.

## Claims

1. A computer-implemented method, comprising:
- processing a data stream comprising input point cloud having been split (802) into input tiles and their respective bounding boxes;
- sorting (802) the bounding boxes according to a distance to a viewing location;
- dividing (803) a rendering framebuffer into screen-space rendering tiles;
- projecting (804) the bounding boxes to a screen space to determine which bounding boxes overlap with which rendering tiles;
- storing (805) indices of overlapping bounding boxes as a list per a corresponding screen-space rendering tile being overlapped;
- reconstructing a screen space surface by rendering the points of the bounding boxes to screen-space rendering tile points, by fetching data of the input tile to which the stored indices of the bounding boxes refer to;
- rendering the reconstructed screen space surface.

2. The method according to claim 1, further comprising splitting a point cloud into tiles and their respective bounding boxes.

3. The method according to claims 1 or 2, further comprising storing sorted bounding boxes and their rendering metadata.

4. The method according to claim 3, wherein the rendering metadata for each bounding box comprises one or more of the following: minimum depth in the screen space or maximum depth in the screen space.

5. The method according to any of the claims 1 to 4, further comprising terminating the rendering after all rendering screen space tile points have been covered.

6. The method according to any of the claims 1 to 5, wherein the bounding boxes that are overlapping in depth are processed as a unit.

7. An apparatus comprising at least:
- means for processing a data stream comprising input point cloud having been split into input tiles and their respective bounding boxes;
- means for sorting the bounding boxes according to a distance to a viewing location;
- means for dividing a rendering framebuffer into screen-space rendering tiles;
- means for projecting the bounding boxes to a screen space to determine which bounding boxes overlap with which rendering tiles;
- means for storing indices of overlapping bounding boxes as a list per a corresponding screen-space rendering tile being overlapped;
- means for reconstructing a screen space surface by rendering the points of the bounding boxes to screen-space rendering tile points, by fetching data of the input tile to which the stored indices of the bounding boxes refer to; and
- means for rendering the reconstructed screen space surface.

8. The apparatus according to claim 7, further comprising means for receiving the data stream.

9. The apparatus according to claim 7 or 8, further comprising means for splitting a point cloud into tiles and their respective bounding boxes.

10. The apparatus according to any of the claims 7 to 9, further comprising means for storing sorted bounding boxes and their rendering metadata.

11. The apparatus according to claim 10, wherein the rendering metadata for each bounding box comprises one or more of the following: minimum depth in the screen space, maximum depth in the screen space.

12. The apparatus according to any of the claims 7 to 11, wherein the bounding boxes comprise axis-aligned bounding boxes (AABB).

13. The apparatus according to any of the claims 7 to 12, further comprising means for terminating the rendering after all rendering screen space tile points have been covered.

14. The apparatus according to any of claims 7 to 13, wherein the bounding boxes that are overlapping in depth are processed as a unit.

15. A computer program product embodied on a non-transitory computer readable medium, comprising computer program code configured to, when executed on at least one processor, cause an apparatus or a system to:
- process a data stream, comprising input point cloud having been split into input tiles and their respective bounding boxes;
- sort bounding boxes according to a distance to a viewing location;
- divide a rendering framebuffer into screen-space rendering tiles;
- project the bounding boxes to a screen space to determine which bounding boxes overlap with which rendering tiles;
- store indices of overlapping bounding boxes as a list per a corresponding screen-space rendering tile being overlapped;
- reconstruct a screen space surface by rendering the points of the bounding boxes to screen-space rendering tile points, by fetching data of the input tile to which the stored indices of the bounding boxes refer to; and
- render the reconstructed screen space surface.

## Patentansprüche

1. Computerimplementiertes Verfahren, das Folgendes umfasst:
- Verarbeiten eines Datenstroms, der eine Eingangspunktwolke umfasst, die in Eingangskacheln und deren jeweilige Begrenzungsboxen geteilt (802) wurde;
- Sortieren (802) der Begrenzungsboxen gemäß einem Abstand zu einem Betrachtungsort;
- Aufteilen (803) eines Renderframepuffers in Bildschirmraumrenderkacheln;
- Projizieren (804) der Begrenzungsboxen in einen Bildschirmraum, um zu bestimmen, welche Begrenzungsboxen welche Renderkacheln überlappen;
- Speichern (805) von Indices von überlappenden Begrenzungsboxen als eine Liste für eine entsprechende Bildschirmraumrenderkachel, die überlappt wird;
- Rekonstruieren einer Bildschirmraumfläche durch Rendern der Punkte der Begrenzungsboxen zu Bildschirmraumrenderkachelpunkten durch Abrufen von Daten der Eingangskachel, auf die sich die gespeicherten Indices der Begrenzungsboxen beziehen;
- Rendern der rekonstruierten Bildschirmraumfläche.

2. Verfahren nach Anspruch 1, das ferner das Teilen einer Punktwolke in Kacheln und deren jeweilige Begrenzungsboxen umfasst.

3. Verfahren nach Anspruch 1 oder 2, das ferner das Speichern von sortierten Begrenzungsboxen und deren jeweiligen Rendermetadaten umfasst.

4. Verfahren nach Anspruch 3, wobei die Rendermetadaten für jede Begrenzungsbox eines oder mehreres von Folgendem umfassen: eine minimale Tiefe im Bildschirmraum oder eine maximale Tiefe im Bildschirmraum.

5. Verfahren nach einem der Ansprüche 1 bis 4, das ferner das Beenden des Renderns, nachdem alle Renderbildschirmraumkachelpunkte abgedeckt sind, umfasst.

6. Verfahren nach einem der Ansprüche 1 bis 5, wobei die Begrenzungsboxen, die sich in der Tiefe überlappen, als eine Einheit verarbeitet werden.

7. Vorrichtung, die mindestens Folgendes umfasst:
- Mittel zum Verarbeiten eines Datenstroms, der eine Eingangspunktwolke umfasst, die in Eingangskacheln und deren jeweilige Begrenzungsboxen geteilt wurde;
- Mittel zum Sortieren der Begrenzungsboxen gemäß einem Abstand zu einem Betrachtungsort;
- Mittel zum Aufteilen eines Renderframepuffers in Bildschirmraumrenderkacheln;
- Mittel zum Projizieren der Begrenzungsboxen in einen Bildschirmraum, um zu bestimmen, welche Begrenzungsboxen welche Renderkacheln überlappen;
- Mittel zum Speichern von Indices von überlappenden Begrenzungsboxen als eine Liste für eine entsprechende Bildschirmraumrenderkachel, die überlappt wird;
- Mittel zum Rekonstruieren einer Bildschirmraumfläche durch Rendern der Punkte der Begrenzungsboxen zu Bildschirmraumrenderkachelpunkten durch Abrufen von Daten der Eingangskachel, auf die sich die gespeicherten Indices der Begrenzungsboxen beziehen; und
- Mittel zum Rendern der rekonstruierten Bildschirmraumfläche.

8. Vorrichtung nach Anspruch 7, die ferner Mittel zum Empfangen des Datenstroms umfasst.

9. Vorrichtung nach Anspruch 7 oder 8, die ferner Mittel zum Teilen einer Punktwolke in Kacheln und deren jeweilige Begrenzungsboxen umfasst.

10. Vorrichtung nach einem der Ansprüche 7 bis 9, die ferner Mittel zum Speichern von sortierten Begrenzungsboxen und deren Rendermetadaten umfasst.

11. Vorrichtung nach Anspruch 10, wobei die Rendermetadaten für jede Begrenzungsbox eines oder mehreres von Folgendem umfassen: eine minimale Tiefe im Bildschirmraum, eine maximale Tiefe im Bildschirmraum.

12. Vorrichtung nach einem der Ansprüche 7 bis 11, wobei die Begrenzungsboxen achsenausgerichtete Begrenzungsboxen (AABB) umfassen.

13. Vorrichtung nach einem der Ansprüche 7 bis 12, die ferner Mittel zum Beenden des Renderns, nachdem alle Renderbildschirmraumkachelpunkte abgedeckt sind, umfasst.

14. Vorrichtung nach einem der Ansprüche 7 bis 13, wobei die Begrenzungsboxen, die sich in der Tiefe überlappen, als eine Einheit verarbeitet werden.

15. Computerprogrammprodukt, das sich auf einem nichttransitorischen computerlesbaren Medium befindet, das einen Computerprogrammcode umfasst, der dazu ausgelegt ist, wenn er auf mindestens einem Prozessor ausgeführt wird, eine Vorrichtung oder ein System zu Folgendem zu veranlassen:
- Verarbeiten eines Datenstroms, der eine Eingangspunktwolke umfasst, die in Eingangskacheln und deren jeweilige Begrenzungsboxen geteilt wurde;
- Sortieren der Begrenzungsboxen gemäß einem Abstand zu einem Betrachtungsort;
- Aufteilen eines Renderframepuffers in Bildschirmraumrenderkacheln;
- Projizieren der Begrenzungsboxen in einen Bildschirmraum, um zu bestimmen, welche Begrenzungsboxen welche Renderkacheln überlappen;
- Speichern von Indices von überlappenden Begrenzungsboxen als eine Liste für eine entsprechende Bildschirmraumrenderkachel, die überlappt wird;
- Rekonstruieren einer Bildschirmraumfläche durch Rendern der Punkte der Begrenzungsboxen zu Bildschirmraumrenderkachelpunkten durch Abrufen von Daten der Eingangskachel, auf die sich die gespeicherten Indices der Begrenzungsboxen beziehen; und
- Rendern der rekonstruierten Bildschirmraumfläche.

## Revendications

1. Procédé mis en œuvre par ordinateur, comprenant :
- le traitement d'un flux de données comprenant un nuage de points d'entrée qui a été fractionné (802) en tuiles d'entrée et leurs boîtes englobantes respectives ;
- le tri (802) des boîtes englobantes selon une distance par rapport à un emplacement de visualisation ;
- la division (803) d'une mémoire tampon de trame de rendu en tuiles de rendu d'espace d'écran ;
- la projection (804) des boîtes englobantes sur un espace d'écran pour déterminer quelles boîtes englobantes se chevauchent avec quelles tuiles de rendu ;
- le stockage (805) d'indices de boîtes englobantes qui se chevauchent sous forme de liste par tuile de rendu d'espace d'écran correspondante en cours de chevauchement ;
- la reconstruction d'une surface d'espace d'écran en rendant les points des boîtes englobantes en points de tuile de rendu d'espace d'écran, en récupérant les données de la tuile d'entrée à laquelle les indices stockés des boîtes englobantes se réfèrent ;
- le rendu de la surface d'espace d'écran reconstruite.

2. Procédé selon la revendication 1, comprenant en outre le fractionnement d'un nuage de points en tuiles et leurs boîtes englobantes respectives.

3. Procédé selon les revendications 1 ou 2, comprenant en outre le stockage de boîtes englobantes triées et de leurs métadonnées de rendu.

4. Procédé selon la revendication 3, dans lequel les métadonnées de rendu pour chaque boîte englobante comprennent un ou plusieurs des éléments suivants : une profondeur minimale dans l'espace d'écran ou une profondeur maximale dans l'espace d'écran.

5. Procédé selon l'une des revendications 1 à 4, comprenant en outre la fin du rendu après que tous les points de tuile d'espace d'écran de rendu ont été couverts.

6. Procédé selon l'une des revendications 1 à 5, dans lequel les boîtes englobantes qui se chevauchent en profondeur sont traitées comme une unité.

7. Appareil comprenant au moins :
- des moyens pour traiter un flux de données comprenant un nuage de points d'entrée qui a été fractionné en tuiles d'entrée et leurs boîtes englobantes respectives ;
- des moyens pour trier les boîtes englobantes selon une distance par rapport à un emplacement de visualisation ;
- des moyens pour diviser une mémoire tampon de trame de rendu en tuiles de rendu d'espace d'écran ;
- des moyens pour projeter les boîtes englobantes sur un espace d'écran pour déterminer quelles boîtes englobantes se chevauchent avec quelles tuiles de rendu ;
- des moyens pour stocker des indices de boîtes englobantes qui se chevauchent sous forme de liste par tuile de rendu d'espace d'écran correspondante en cours de chevauchement ;
- des moyens pour reconstruire une surface d'espace d'écran en rendant les points des boîtes englobantes en points de tuile de rendu d'espace d'écran, en récupérant les données de la tuile d'entrée à laquelle les indices stockés des boîtes englobantes se réfèrent ; et
- des moyens pour rendre la surface d'espace d'écran reconstruite.

8. Appareil selon la revendication 7, comprenant en outre des moyens pour recevoir le flux de données.

9. Appareil selon la revendication 7 ou 8, comprenant en outre des moyens pour fractionner un nuage de points en tuiles et leurs boîtes englobantes respectives.

10. Appareil selon l'une des revendications 7 à 9, comprenant en outre des moyens pour stocker des boîtes englobantes triées et leurs métadonnées de rendu.

11. Appareil selon la revendication 10, dans lequel les métadonnées de rendu pour chaque boîte englobante comprennent un ou plusieurs des éléments suivants : une profondeur minimale dans l'espace d'écran, une profondeur maximale dans l'espace d'écran.

12. Appareil selon l'une des revendications 7 à 11, dans lequel les boîtes englobantes comprennent des boîtes englobantes (AABB) alignées dans l'axe.

13. Appareil selon l'une des revendications 7 à 12, comprenant en outre des moyens pour mettre fin au rendu après que tous les points de tuile d'espace d'écran de rendu ont été couverts.

14. Appareil selon l'une des revendications 7 à 13, dans lequel les boîtes englobantes qui se chevauchent en profondeur sont traitées comme une unité.

15. Produit de programme informatique incorporé dans un support non transitoire lisible par ordinateur, comprenant un code de programme informatique configuré pour, lorsqu'il est exécuté sur au moins un processeur, amener un appareil ou un système à :
- traiter un flux de données comprenant un nuage de points d'entrée qui a été fractionné en tuiles d'entrée et leurs boîtes englobantes respectives ;
- trier les boîtes englobantes selon une distance par rapport à un emplacement de visualisation ;
- diviser une mémoire tampon de trame de rendu en tuiles de rendu d'espace d'écran ;
- projeter les boîtes englobantes sur un espace d'écran pour déterminer quelles boîtes englobantes se chevauchent avec quelles tuiles de rendu ;
- stocker des indices de boîtes englobantes qui se chevauchent sous forme de liste par tuile de rendu d'espace d'écran correspondante en cours de chevauchement ;
- reconstruire une surface d'espace d'écran en rendant les points des boîtes englobantes en points de tuile de rendu d'espace d'écran, en récupérant les données de la tuile d'entrée à laquelle les indices stockés des boîtes englobantes se réfèrent ; et
- rendre la surface d'espace d'écran reconstruite.
